Europäisches Patentamt

European Patent Office

Office européen des brevets

(19)

(11) **EP 1 426 745 A1**

(12) # EUROPEAN PATENT APPLICATION
published in accordance with Art. 158(3) EPC

(43) Date of publication:
**09.06.2004 Bulletin 2004/24**

(51) Int Cl.⁷: **G01J 3/00**, G01B 9/02,
G01R 23/17

(21) Application number: **02744009.8**

(22) Date of filing: **17.06.2002**

(86) International application number:
**PCT/RU2002/000294**

(87) International publication number:
**WO 2003/016840 (27.02.2003 Gazette 2003/09)**

(84) Designated Contracting States:
**AT BE CH CY DE DK ES FI FR GB GR IE IT LI LU
MC NL PT SE TR**

(30) Priority: **13.08.2001 RU 2001122764
17.12.2001 RU 2001134476**

(71) Applicant: **Atnashev, Vitaly Borisovich
Ekaterinburg, 620003 (RU)**

(72) Inventors:
• **ATNASHEV, Vitaliy
Ekaterinburg, 620003 (RU)**

• **ATNASHEV, Aleksey
g. Ekaterinburg, 620003 (RU)**
• **ATNASHEV, Pavel
Ekaterinburg, 620003 (RU)**
• **BOYARCHENKOV, Alexey
Ekaterinburg, 620100 (RU)**

(74) Representative: **Garratt, Peter Douglas et al
Mathys & Squire
100 Grays Inn Road
London WC1X 8AL (GB)**

(54) **SPECTROMETRIC METHOD AND DEVICE FOR CARRYING OUT SAID METHOD (VARIANTS)**

(57)     The feature of the present methods is that the interference stripe set of a standing light wave is registered in a spatial frequency signal form by means of projecting the image of the above set on a periodical system which contains photo-cells. The electric signals received from the above photo-cells are registered with relation to location of these photo-cells in the periodical system, and analyzed.

The proposed spectrometric methods are implemented in interferometers which contains the following optically conjugated elements: a light radiation source, a reflection mirror, one or two thin partially transparent light sensitive films, a periodical system containing photo-cells, a spectrum analyser and optionally a beamsplitter.

The present methods of the spectrometry and interferometers for carrying them out allow increasing in the accuracy of measurement of wavelengths by 2-5 times in a wide spectral range.

EP 1 426 745 A1

## Description

## Technical Field

The present inventions relate to a technical field of spectrum analysis and can be used for the spectrum analysis of a light radiation.

## Background of the Invention.

The commonly used method for the spectrum analysis of a light radiation is based on a prism or diffraction grating splitting the light beam into the set of spectrum lines which is scanned. One of the classic devices for this purpose is a so called monochromator consisting of mirrors and a moving diffraction grating for spectrum scanning [Malyshev V.I. "Introduction in experimental spectroscopy". M.: Nauka, 1979, pp. 185-201, 257-274].

The basic disadvantage of the above monochromator is its low sensitivity in comparison to so called interferometers.

A well-known interferometer consists of an optically conjugated light source, a reflection mirror, a beamsplitter plate, detector and spectrum analyzer [Merz L. "Integral conversion in optics". M.: Mir, 1969, pp.80-83].

The most close to the present is a spectrometric method based on a registration of system of interference stripes of standing light wave by means of a thin partially transparent film, containing micro particles which scatter or absorb the energy of the standing light wave. This film is located between the light source and a reflection mirror and inclined to above mirror plane. [Patent RU № 2177605, published 27.12.2001, Int.Cl. 7 G01J 3/00, G01B 9/02, G01R 23/17].

The present spectrometric method is implemented in an interferometer consisting of an optically conjugated light source, a reflection mirror, a spectrum analyzer and a thin partially transparent film, containing micro particles which scatter or absorb the energy of the standing light wave, located between the light source and the reflection mirror [Patent RU № 2177605, published 27.12.2001, Int.Cl. 7 G01J 3/00, G01B 9/02, G01R 23/17].

## Disclosure of the Invention.

The present invention is based on the registration of the standing light wave's interference stripe set by means of a thin partially transparent film in a form of a spatial frequency signal by means of projecting the above set's image on the periodical system which contains photo-cells.

The described task is solved by the following spectrometric methods (variants):

**Variant 1 of the spectrometric method**. The method of spectrometry is based on the registration of the standing light wave's interference stripe set by means of a thin partially transparent film; which thickness should not exceed $\lambda/2$. The film is located between the light source and a reflection mirror at an angle $\theta$, determined by the equation $sin\ \theta = \lambda/2d$, where $\theta$-the angle between the thin partially transparent film and the light wave front, $\lambda$ - wavelength, $d$-period of interference stripes, formed in the thin partially transparent film with an influence of the standing light wave. The registration is implemented by means of projecting the above set's image on a periodical system which contains photocells; an electrical signal received from the above photo-cells is registered in a form of a spatial domain signal that is analyzed and converted into a frequency domain signal.

The 1st variant of spectrometric method is implemented in the following interferometers (variant 1 and variant 2).

**Variant 1 of the interferometer**. The interferometer contains an optically conjugated light source, a reflection mirror, a spectrum analyzer and a thin partially transparent film which scatters or absorbs electrical field energy of the standing light wave. The interferometer is additionally equipped with a periodical system which contains photo-cells and located straight behind the reflection mirror. The above film, which thickness should not exceed $\lambda/2$, is located between the light source and the reflection mirror at an angle $\theta$, determined by the equation $sin\ \theta = \lambda/2d$, where $\theta$ - the angle between the thin partially transparent film and the light wave front, $\lambda$ - wavelength, $d$ - period of interference stripes, formed in the thin partially transparent film with an influence of the standing light wave. The reflection mirror is implemented as partially transparent for the light.

**Variant 2 of the interferometer.** The interferometer contains an optically conjugated light source, a reflection mirror, a spectrum analyzer and a thin partially transparent film which scatters or absorbs electrical field energy of the standing light wave. The interferometer is additionally equipped with the periodical system which contains photo-cells, and beamsplitter which is located between the above film and the light source; the beamsplitter is optically conjugated with the periodical system which contains photo-cells. The above film, which thickness should not exceed $\lambda/2$, is located between the light source and the reflection mirror at an angle $\theta$, determined by the equation $sin\ \theta = \lambda/2d$, where $\theta$ - the angle between the thin partially transparent film and the light wave front, $\lambda$ - wavelength; $d$ - period of interference stripes, formed in the thin partially transparent film with an influence of the standing light wave.

**Variant 2 of the spectrometric method.** The method of spectrometry is based on the registration of the standing light wave's interference stripe set by means of the thin partially transparent film that scatters or absorbs electrical field energy of the standing light wave; the above film, which thickness should not exceed $\lambda/2$, is located between the light source and the reflection mirror at an angle $\theta_1$ determined by the equation $sin\ \theta_1 = \lambda/2\ d_1$, where $\theta_1$ - the angle between the thin partially transparent film and the light wave front, $\lambda$ - wavelength, $d$ - period of the interference stripes, formed in the thin partially transparent film with an influence of the standing light wave; the registration of the above interference stripes with period $d_1$ is implemented in a spatial frequency signal form by means of projecting the image of the above set on the periodical system which contains photo-cells. The electrical signals received from the above photo-cells are registered with relation to location of these photo-cells in the above periodical system, and analyzed. The second thin partially transparent film, which thickness should not exceed $\lambda/2$, is located between the first partially transparent thin film and the reflection mirror at an angle $\theta_2$ determined by the equation $sin\ \theta_2 = \lambda/2d_2$, where $\theta_2$ - the angle between the second thin partially transparent film and the light wave front, $\lambda$ - wavelength, $d_2$-period of the interference stripes, formed in the second thin partially transparent film with an influence of the standing light wave. The angle $\theta_1$ between the first thin partially transparent film plane and the reflection mirror plane is set in relation to the angle $\theta_2$ between the second thin partially transparent film plane and the reflection mirror plane in the range 0-180°. The second thin partially transparent film plane should be rotated around the axis matching the light expansion direction relative to the first thin partially transparent film plane at an angle $\Omega$ ranged 0.1-90°. The images of two sets of interference stripes obtained in such a way are projected on the matrix periodical system which contains photo-cells. So, the system contains a mirror which normal vector matches a light wave direction and two films which are inclined to each other at angle $\theta_1$-$\theta_2$. Also, the second film is rotated around light expansion direction axis at an angle $\Omega$.

The second variant of the spectrometric method may be implemented in the following interferometers (variants 3 and 4).

**Variant 3 of the interferometer**. The interferometer contains an optically conjugated light source, a reflection mirror, a spectrum analyzer, a thin partially transparent film which scatters or absorbs electrical field energy of the standing light wave. The film is located between the light source and the reflection mirror, inclined to the plane of the above mirror. A periodical system which contains photo-cells is located behind the reflection mirror; the reflection mirror is implemented as partially transparent for the light. The interferometer is additionally equipped with the second thin partially transparent film, which scatters or absorbs electrical field energy of the standing light wave, located between the first thin partially transparent film and the reflection mirror and inclined to the plane of the above mirror. The second thin partially transparent film is rotated around the optical axis of the interferometer relatively to the plane of the first thin partially transparent film. The periodical system which contains photo-cells is implemented as a matrix periodical system. The thin partially transparent film's planes may be parallel or be at angle $\theta_1$-$\theta_2$ and they have common axis matching optical axis of the interferometer. The second thin partially transparent film is rotated around that axis at an angle $\Omega$.

**The variant 4 of the interferometer.** The interferometer contains an optically conjugated light source, a reflection mirror, a spectrum analyzer, a thin partially transparent film which scatters or absorbs electrical field energy of the standing light wave, located between the light source and the reflection mirror, inclined to the plane of the above mirror. A periodical system which contains photo-cells is located behind the reflection mirror. The interferometer is additionally equipped with the second thin partially transparent film which scatters or absorbs electrical field energy of the standing light wave, located between the first thin partially transparent film and the reflection mirror and inclined to the plane of the above mirror. A beamsplitter is located between the first thin partially transparent film and the light source. The second thin partially transparent film is rotated around the optical axis of the interferometer relatively to the plane of the first thin partially transparent film. The periodical system which contains photo-cells is optically conjugated with the beamsplitter and implemented as a matrix periodical system. The thin partially transparent film's planes may be parallel or be at angle $\theta_1$-$\theta_2$ and they have common axis matching optical axis of the interferometer. The second thin partially transparent film is rotated around that axis at an angle $\Omega$. The matrix periodical system may be implemented as a matrix form of Charged Coupled Device (CCD).

**Variant 3 of the spectrometric method.** The method of spectrometry is based on the registration of the standing light wave's interference stripe set by means of the thin partially transparent film which scatters or absorbs electrical field energy of the standing light wave. The above film, which thickness should not exceed $\lambda/2$, is located between the light source and the reflection mirror at the angle $\theta$, determined by the equation $sin\ \theta = \lambda/2d$, where $\theta$ - the angle between the thin partially transparent film and the light wave front, $\lambda$ - wavelength, $d$ - period of interference stripes, formed in the thin partially transparent film with an influence of the standing light wave. The registration of the above standing light wave's interference stripe set with period d is implemented in a spatial frequency signal form by means of projecting the image of the above set on the matrix periodical system which contains photo-cells; the electric signals received from the above photo-cells are registered with relation to location of these photo-cells in the above matrix periodical system and analyzed. The matrix periodical system which contains photo-cells is implemented capable to rotate around the axis matching the light expansion direction.

**Variant 4 of the spectrometric method.** The method of spectrometry is based on the registration of the standing light wave's interference stripe set by means of the thin partially transparent film which scatters or absorbs electrical field energy of the standing light wave, differs in that the above film, which thickness should not exceed $\lambda/2$, is located between the light source and the reflection mirror at an angle θ, determined by the equation $sin\ \theta = \lambda/2d$, where θ-the angle between the thin partially transparent film and the light wave front, $\lambda$ - wavelength, $d$ -period of interference stripes, formed in the thin partially transparent film with an influence of the standing light wave. The registration of the above standing light wave's interference stripe set with period d is implemented in a spatial frequency signal form by means of projecting the image of the above set on the matrix periodical system, which contains photo-cells placed in a parallel arrays with a horizontal period $d_1$ and vertical period $d_m$. The matrix periodical system is implemented capable to rotate around the axis matching the light expansion direction by the angle $\alpha$ between horizontal arrays of photo-cells and interference stripes projected to the matrix periodical system, the angle $\alpha$ is determined by the equation $sin\ \alpha = d/d_1$, the vertical period of photo-cell arrays is determined by the equation $d_m = (N+1)d/cos\ \alpha$, where $N$ - amount of photo-cells located in an array of the above periodical matrix system. The electrical signals received from the above photo-cells are registered with relation to location of these photo-cells in the matrix periodical system and analyzed.

The 3-rd and 4-th variants of spectrometric method may be implemented in the following interferometers (variants 5 and 6).

**Variant 5 of the interferometer.** The interferometer contains an optically conjugated light source, a reflection mirror, a spectrum analyzer, a thin partially transparent film which scatters or absorbs electrical field energy of the standing light wave. The interferometer is additionally equipped with the optically conjugated matrix periodical system, which contains photo-cells, located behind the reflection mirror and implemented capable to rotate around the axis of the interferometer. The film, which thickness should not exceed $\lambda/2$, located between the light source and the reflection mirror at an angle θ, determined by the equation $sin\ \theta = \lambda/2d$, where θ - the angle between the thin partially transparent film and the light wave front, $\lambda$-wavelength, $d$ - period of interference stripes, formed in the thin partially transparent film with an influence of the standing light wave. The reflection mirror is implemented as partially transparent for the light. The matrix periodical system may be implemented as a matrix form of Charged Coupled Device (CCD).

**Variant 6 of the interferometer.** The interferometer contains an optically conjugated light source, a reflection mirror, a spectrum analyzer, a thin partially transparent film which scatters or absorbs electrical field energy of the standing light wave. The interferometer is additionally equipped with the optically conjugated matrix periodical system, which contains photo-cells, and a beamsplitter, located between the above film and the light source, optically conjugated with the matrix periodical system containing photo-cells. The matrix periodical system is implemented capable to rotate around the axis of the interferometer. The film, which thickness should not exceed $\lambda/2$, is located between the light source and the reflection mirror at an angle θ, determined by the equation $sin\ \theta = \lambda/2d$, where θ - the angle between the thin partially transparent film and the light wave front, $\lambda$ - wavelength, $d$ - period of interference stripes, formed in the thin partially transparent film with an influence of the standing light wave. The matrix periodical system may be implemented as a matrix form of Charged Coupled Device (CCD).

**Brief Description of Drawings.**

Main points of the inventions are explained in figures that represent:

fig. 1 - variant 1 interferometer's scheme;
fig. 2 - distribution of the light intensity on the surface of the thin partially transparent film, which scatters or absorbs electrical field energy of the standing light wave;
fig. 2b - distribution of measured light intensity on discrete photo-cell array;
fig. 2c - electrical signal on spectrum analyzer output;
fig. 3 - variant 2 interferometer's scheme;
fig. 4 - variant 3 interferometer's scheme;
fig. 5 - image of two interference stripe sets in plane of the matrix periodical system;
fig. 6 - variant 4 interferometer's scheme;
fig. 7 - variant 5 interferometer's scheme;
fig. 8 - variant 5 interferometer's scheme;
fig. 9 - scheme of projecting interference stripe set on the matrix periodical system;
fig. 10 - variant 6 interferometer's scheme;
fig. 11 - variant 6 interferometer's scheme.

**Modes for Carrying Out the Invention**

The present spectrometric methods are implemented in the proposed interferometers in the following way.

**Implementation of the first variant of spectrometric method in the interferometer (variant 1):**

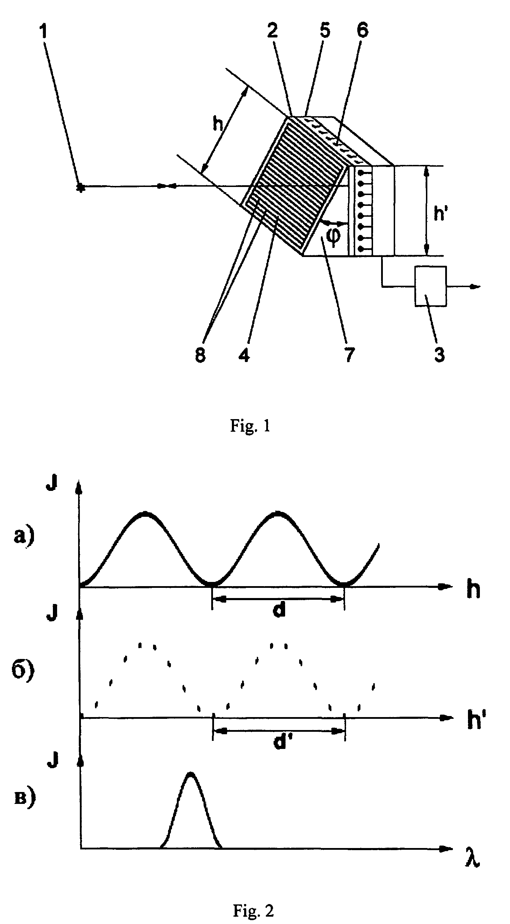

The variant 1 interferometer (fig.1) consists of the optically conjugated light source 1, the reflection mirror 2, the spectrum analyzer 3, the thin partially transparent film 4 which scatters or absorbs electrical field energy of the standing light wave, the optically conjugated periodical system 5 which contains photo-cells 6 and is located behind the reflection mirror 2; the above film 4 is located between the light source's 1 and the reflection mirror 2; the reflection mirror 2 is implemented as partially transparent for the light. The thin partially transparent film 4 may be applied on one of the surfaces of the optical wedge 7, and the reflection mirror 2 may be applied on another surface. The reflection coefficient of the mirror 2 may be in 0.50-0.99 range and its transparency coefficient may be 0.01-0.50. The image 8 of the interference stripe set is projected on a periodical system 5. Periodical system 5 which contains photo-cells 6 may be implemented as an array or matrix form of Charged Coupled Device (CCD).

Interferometer works in the following way.

The incident light radiation from the light source 1 reflects from the mirror 2 and a standing light wave is formed in the area between the source and the mirror. The thin partially transparent film 4 scatters or absorbs electrical field energy of the standing light wave; it is placed aslant and crosses some part of the standing wave. The interference stripe set is formed in it. The registration of that set can be done in a form of spatial frequency signal with period $d$, determined by the equation $sin\ \theta = \lambda/2d$, where $\theta$ - the angle between the thin partially transparent film 4 and the light wave front, $\lambda$ - wavelength). When using the optical wedge 7, the angle $\varphi$ between the plane of the thin partially transparent film 4 and the reflection mirror 2 is fixed and determined by the equation $sin\ \varphi = \lambda/2dn$, where $\lambda$ - wavelength; $d$ - period of interference stripe set, $n$ - refraction index of optical wedge's material.

Image 8 of the interference stripe set is projected through the partially transparent reflection mirror 2 on the periodical system 5 which contains photo-cells 6. The image is then registered with relation to location of photo-cells 6 in the periodical system 5. The recorded electrical signals are then Fourier transformed by the spectrum analyzer 3; its output is the frequency domain signal that will represent the actual light's spectrum. A high resolution and a wide dynamic range of the determined wavelengths are achieved.

**Implementation of the first variant of spectrometric method in the interferometer (variant 2):**

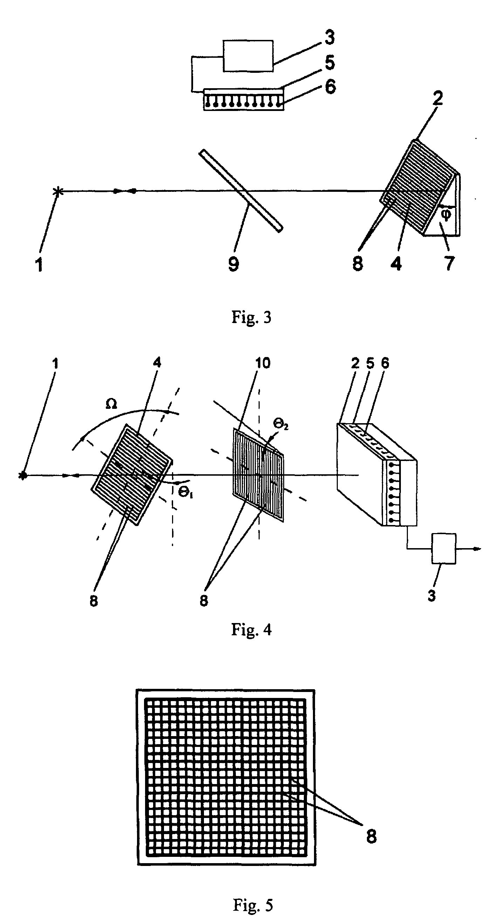

The variant 2 interferometer (fig.3) consists of the optically conjugated light source 1, the reflection mirror 2, the spectrum analyzer 3, the thin partially transparent film 4 which scatters or absorbs electrical field energy of the standing light wave, the periodical system 5 which contains photo-cells 6, the beamsplitter 9 located between the film 4 and the light source 1. It is optically conjugated with the periodical system 5, which contains photo-cells 6. The film 4, which thickness should not exceed $\lambda/2$, is located between the light source 1 and the reflection mirror 2 at an angle $\theta$, determined by the equation $sin\ \theta = \lambda/2d$, where $\theta$ - the angle between the thin partially transparent film 4 and the light wave front, $\lambda$ - wavelength, $d$ - period of the interference stripe set, formed in the thin partially transparent film 4 with an influence of the standing light wave. Periodical system 5 which contains photo-cells 6 may be implemented as an array or matrix form of Charged Coupled Device (CCD).

Interferometer works in the following way. The incident light radiation from the light source 1 reflects from the mirror 2 and a standing light wave is formed in the area between the source and the mirror. The thin partially transparent film 4 scatters or absorbs electrical field energy of the standing light wave; it is placed aslant and crosses some part of the standing wave. The interference stripe set is formed in it. The set can be registered in a form of spatial frequency signal with a period $d$, determined by the equation $sin\ \theta = \lambda/2d$, where $\theta$ - the angle between the thin partially transparent film 4 and the light wave front, $\lambda$ - wavelength. When using the optical wedge 7, an angle $\varphi$ between the plane of the thin partially transparent film 4 and the reflection mirror 2 is fixed and determined by the equation $sin\ \varphi = \lambda/2dn$, where $\lambda$ - wavelength; $d$ - period of interference stripe set, $n$ - refraction index of the optical wedge's material.

Image 8 of the interference stripe set is projected through the partially transparent reflection mirror 2 on the periodical system 5 which contains photo-cells 6. The image is then registered with relation to location of photo-cells 6 in the periodical system 5. The recorded electrical signals are then Fourier transformed by the spectrum analyzer 3; its output is the frequency domain signal that will represent the actual light's spectrum. A high resolution and a wide dynamic range of the determined wavelengths are achieved.

**Implementation of the second variant of spectrometric method in the interferometer (variant 3):**

The variant 3 interferometer (fig.4) consists of the optically conjugated light source 1; the reflection mirror 2; the spectrum analyzer 3; the thin partially transparent film 4 which scatters or absorbs electrical field energy of the standing light wave, located between the light source 1 and the reflection mirror 2 and inclined to the plane of the mirror 2, which is implemented partially transparent for the light; the optically conjugated periodical system 5 which contains photo-cells 6 and is located behind the reflection mirror 2. The interferometer is additionally equipped with the second thin partially transparent film 10 which also scatters or absorbs electrical field energy of the standing light wave and is located between the first thin partially transparent film 4 and the periodical system 5 which contains photo-cells 6 and may be implemented as a matrix form of Charged Coupled Device (CCD).

The interferometer which is additionally equipped with the second thin partially transparent film 10 works in the following way.

The incident light radiation from the light source 1 reflects from the mirror 2 and a standing light wave is formed in the area between the source and the mirror. Both thin partially transparent films 4 and 10 scatter or absorb electrical field energy of the standing light wave; they are placed aslant and cross some parts of the standing wave. Different interference stripe sets are formed in them. An angle $\theta_1$ between the plane of the first thin partially transparent films 4 and the plane of the reflection mirror 2, is determined by the equation $sin\,\theta_1 = \lambda/2d_1$, where $\lambda$-wavelength, $d_1$ - period of interference stripes. An angle $\theta_2$ between the plane of the second thin partially transparent films 4 and the plane of the reflection mirror 2, is determined by the equation $sin\,\theta_2 = \lambda/2d_2$, where $d_2$ - period of interference stripes. Since the second thin partially transparent film 10 is implemented rotated around the optical axis of the interferometer relatively to the plane of the first thin partially transparent film 4, the image 8 of the two interference stripe sets represents a grid of alternating dark and bright stripes. The resulting image 8 of the two interference stripe sets is then projected through the partially transparent reflection mirror 2 on the matrix periodical system 5 which contains photo-cells 6, and is registered with relation to location of photo-cells 6. The recorded 2-dimentional electrical signals are then Fourier transformed by the spectrum analyzer 3; its output is the frequency domain signal that will represent the actual light's spectrum. The presence of the second thin film makes the resolution about 2 times (when $\theta_1=\theta_2$ and, correspondingly, $d_1=d_2$) higher.

**Implementation of the second spectrometric method in the interferometer (variant 4):**

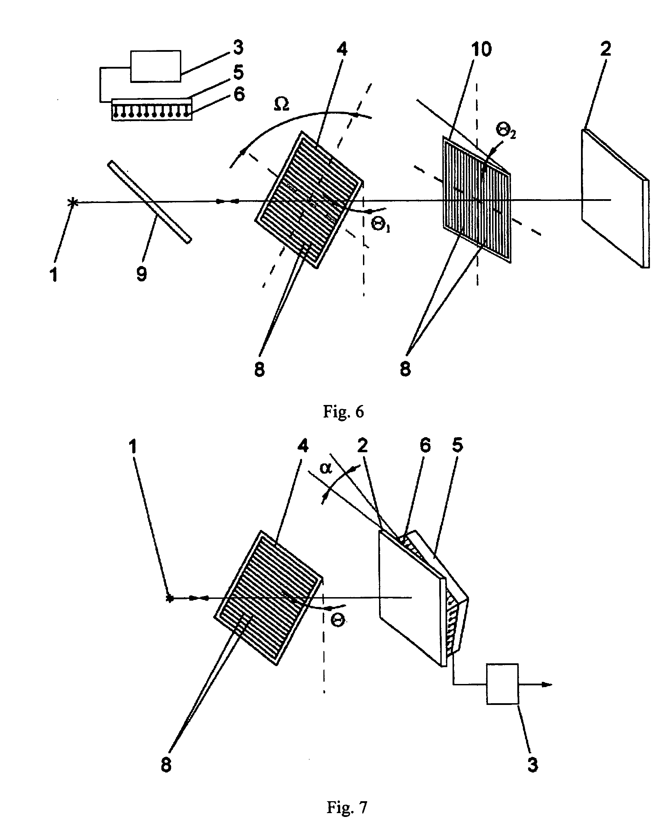

The variant 4 interferometer (fig.6) consists of the optically conjugated light source 1, the reflection mirror 2, the spectrum analyzer 3, the thin partially transparent film 4 which scatters or absorbs electrical field energy of the standing light wave, located between the light source 1 and the reflection mirror 2 and inclined to the plane of the mirror 2, which is implemented partially transparent for the light; the periodical system 5 which contains photo-cells 6. The interferometer is additionally equipped with the second thin partially transparent film 10 which also scatters or absorbs electrical field energy of the standing light wave and is located between the first thin partially transparent film 4 and the reflection mirror 2; and the beamsplitter 9 located between the first thin partially transparent film 4 and the light source 1. The second thin partially transparent film 10 is implemented rotated around the optical axis of the interferometer relatively to the plane of the first thin partially transparent film 4. Also, there is the periodic system 5 which contains photo-cells 6 and optically conjugated with the beamsplitter 9 and implemented as a matrix periodical system.

The interferometer which is additionally equipped with the second thin partially transparent film 10 works in the following way.

The incident light radiation from the light source 1 reflects from the mirror 2 and a standing light wave is formed in the area between the source and the mirror. Both thin partially transparent films 4 and 10 scatter or absorb electrical field energy of the standing light wave; they are placed aslant and cross some parts of the standing wave. Different interference stripe sets are formed in them. The angle $\theta_1$ between the plane of the first thin partially transparent film 4 and the plane of the reflection mirror 2 is determined by the equation $sin\,\theta_1 = \lambda/2d_1$, where $\lambda$-wavelength, $d_1$ - period of interference stripes. The angle $\theta_2$ between the second thin partially transparent film 10 and the plane of the reflection mirror 2 is determined by the equation $sin\,\theta_2 = \lambda/2d_2$, where $d_2$ - period of interference stripes. Since the second thin partially transparent film 10 is implemented rotated around the optical axis of the interferometer relatively to the plane of the first thin partially transparent film 4, the image 8 of the two interference stripe sets represent a grid of alternating dark and bright stripes. The resulting image 8 of the two interference stripe sets is then projected through the beamsplitter 9 on the matrix periodical system 5 which contains photo-cells 6 and is registered with relation to location of photo-cells 6. The registration of the two interference stripe sets is implemented in a form of two-dimensional spatial frequency signal. The recorded electrical signals are then Fourier transformed by the spectrum analyzer 3; its output is the frequency domain signal that will represent the actual light's spectrum. The presence of the second thin film makes the resolution about 2 times (when $\theta_1=\theta_2$ and, correspondingly, $d_1=d_2$) higher.

**The 3-rd and 4-th variants of spectrometric method may be implemented in the following interferometers (variants 5 and 6).**

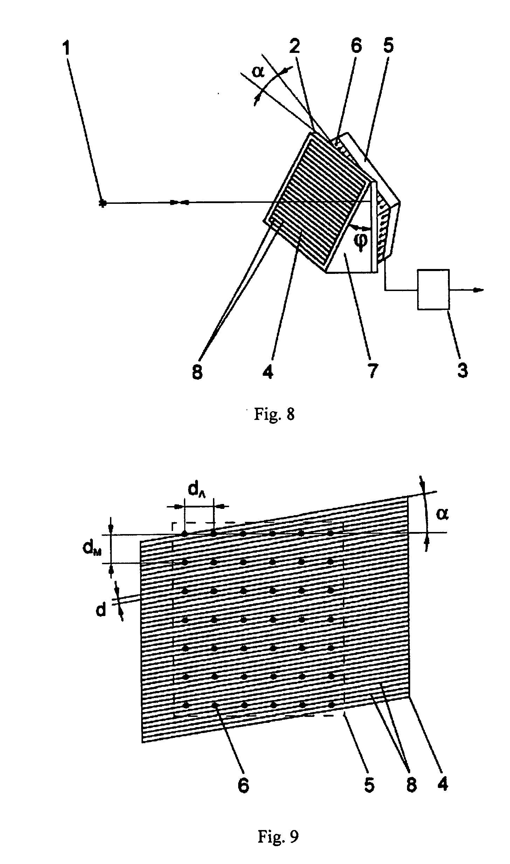

The variant 5 interferometer (fig. 7, 8) consists of the optically conjugated light source 1, the reflection mirror 2, the spectrum analyzer 3, the thin partially transparent film 4 which scatters or absorbs electrical field energy of the standing light wave; the periodical system 5 which contains photo-cells 6, located behind the reflection mirror 2 and implemented capable to rotate around the axis of the interferometer. The film 4 is located between the light source 1 and the reflection mirror 2 which is implemented as partially transparent for the light. The thin partially transparent film 4 may be applied on one of the surfaces of the optical wedge 7 (fig.8), and the reflection mirror 2 may be applied on another surface in a form of the reflecting coating with the reflectivity coefficient 0.50-0.99 and the transparency coefficient 0.01-0.50. The image 8 of the interference stripe set is then projected (fig.9) on the matrix periodical system 5 which contains photo-cells 6.

The incident light radiation from the light source 1 reflects from the mirror 2 and a standing light wave is formed in the area between the source and the mirror. The thin partially transparent film 4 scatters or absorbs electrical field energy of the standing light wave; it is placed aslant and crosses some part of the standing wave. The interference stripe set is formed in it. The registration of that set can be done in a form of spatial frequency signal form with a period $d$, determined by the equation $sin\ \theta = \lambda/2d$, where $\theta$ - the angle between the thin partially transparent film 4 and the wave front, $\lambda$ - wavelength (fig.7). When using the optical wedge 7, the angle $\varphi$ between the plane of the thin partially transparent film 4 and the reflection mirror 2 is determined by the equation $sin\ \varphi = \lambda/2dn$, where $\lambda$ - wavelength; $d$ - period of interference stripes, $n$ - refraction index of optical wedge's material (fig.8). The matrix periodical system 5, which contains photo-cells 6 placed in parallel arrays with a horizontal period $d_l$ and a vertical period $d_m$, is rotated around the axis that matches the light expansion direction by the angle $\alpha$ between the horizontal arrays of photo-cells 6 and the projected interference stripes in the range ($0°$-$90°$).

Choosing the angle $\alpha$ (fig.9).

The angle $\alpha$ is determined by the equation $sin\ \alpha = d/d_1$, where $d_1$ - the period of photo-cells 6 in each array of the periodical system 5. Period $d_m$ is determined by the equation:

$$d_m = \frac{(N+1)d}{\cos\alpha}$$

where $N$ - the amount of photo-cells 6 in each array of the matrix periodical system 5.

For the square matrix periodical system $d_1 = d_m$ and the angle $\alpha$ is determined by the equation

$$tg\alpha = \frac{1}{N+1}.$$

The image 8 of the interference stripe set (as shown on fig.9) is projected through the partial transparent reflection mirror 2 on the matrix periodical system 5 which contains photo-cells 6. The image is then registered with relation to location of photo-cells 6 in the matrix periodical system 5. The recorded 2-dimentional electrical signals are then Fourier transformed by the spectrum analyzer 3; its output is the frequency domain signal that represents the actual light's spectrum. In such a way even higher resolution of the measured wavelength $\lambda$ is reached; for example, in a case of using of square matrix periodical system 5, the resolution of the device would be up to $2N^2$.

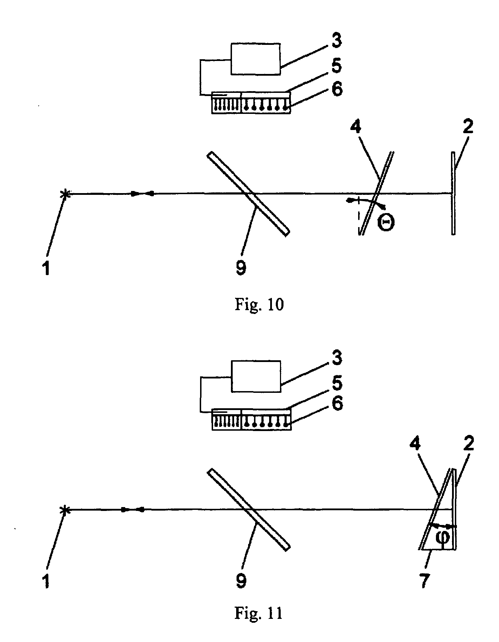

The variant 6 interferometer (fig.10, 11) consists of the optically conjugated light source 1, the reflection mirror 2, the spectrum analyzer 3, the thin partially transparent film 4 which scatters or absorbs electrical field energy of the standing light wave, the matrix periodical system 5 which contains photo-cells 6, the beamsplitter 9 located between the film 4 and the light source 1 and optically conjugated with the matrix periodical system 5 which contains photo-cells 6. The matrix periodical system 5 is implemented capable to rotate around the optical axis of the interferometer. The film 4, which thickness should not exceed $\lambda/2$, is located between the light source 1 and the reflection mirror 2 at an angle $\theta$, determined by the equation $sin\ \theta = \lambda/2d$, where $\theta$ - the angle between the thin partially transparent film and wave front, $\lambda$ - wavelength; $d$ -period of interference stripes, formed in the thin partially transparent film 4 with an influence of the standing light wave.

The incident light radiation from the light source 1 reflects from the mirror 2 and a standing light wave is formed in the area between the source and the mirror. The thin partially transparent film 4 scatters or absorbs electrical field energy of the standing light wave; it is placed aslant and crosses some part of the standing wave. The interference stripe set is formed in it. The registration of that set can be done in a form of spatial frequency signal form with a period $d$, determined by the equation $sin\ \theta = \lambda/2d$, where $\theta$ - the angle between the thin partially transparent film 4 and wave front, $\lambda$ - wavelength (fig.10). When using the optical wedge 7, the angle $\varphi$ between the plane of the thin partially transparent film 4 and the reflection mirror 2 is determined by the equation $sin\ \varphi = \lambda/2dn$, where $\lambda$ - wavelength; $d$ - period of interference stripes, $n$ - refraction index of the optical wedge's material (fig.11). The matrix periodical system 5 which contains photo-cells 6 placed in parallel arrays with a horizontal period $d_1$ and a vertical period $d_m$, is rotated around the axis that matches the light expansion direction by the angle $\alpha$ between the horizontal arrays of photo-cells 6 and the projected interference stripes in the range ($0°$-$90°$).

Choosing the angle $\alpha$ (fig.9).

The angle $\alpha$ is determined by the equation $sin\ \theta = d/d_1$, where $d_1$ - the period of photo-cells 6 in each array of the periodical system 5. Period $d_m$ is determined by the equation:

$$d_m = \frac{(N+1)d}{\cos\alpha}$$

where $N$ - the amount of photo-cells 6 in each array of the matrix periodical system 5.

For the square matrix periodical system $d_1 = d_m$ and the angle $\alpha$ is determined by the equation

$$tg\alpha = \frac{1}{N+1}.$$

The image 8 of the interference stripe set (as shown on fig.9) is projected through the partial transparent reflection mirror 2 on the matrix periodical system 5 which contains photo-cells 6. The image is then registered with relation to location of photo-cells 6 in the matrix periodical system 5. The recorded 2-dimentional electrical signals are then Fourier transformed by the spectrum analyzer 3; its output is the frequency domain signal that represents the actual light's spectrum. In such a way even higher resolution of the measured wavelength λ is reached; for example, in a case of using of square matrix periodical system 5, the resolution of the device would be up to $2N^2$.

The present methods of the spectrometry and interferometers allow increasing in the accuracy of measurement of wavelengths by 2-5 times and even more in a wide spectral range.

**Claims**

1. The present method of the spectrometry is based on the registration of standing light wave's interference stripe set by means of the thin partially transparent film which scatters or absorbs electrical field energy of the standing light wave; the method differs in that the above film, which thickness should not exceed $\lambda/2$, is located between the light source and the reflection mirror at an angle θ, determined by the equation $\sin \theta = \lambda/2d$, where θ - the angle between the thin partially transparent film and the light wave front, λ - wavelength, $d$ - period of interference stripes formed in the thin partially transparent film with an influence of the standing light wave; the registration of the above set of the standing light wave's interference stripes with a period $d$ is implemented in a spatial frequency signal form by means of projecting the above set's image on the periodical system which contains photo-cells; electrical signals received from the above photo-cells are registered with relation to location of these photo-cells in the above periodical system, and analyzed.

2. The interferometer which contains an optically conjugated light source, a reflection mirror, a spectrum analyzer and a thin partially transparent film which scatters or absorbs electrical field energy of the standing light wave, differs in that the interferometer is additionally equipped with an optically conjugated periodical system which contains photo-cells and located behind the reflection mirror; the above film, which thickness should not exceed $\lambda/2$, is located between the light source and the reflection mirror at an angle θ, determined by the equation $\sin \theta = \lambda/2d$, where θ - the angle between the thin partially transparent film and the light wave front, λ - wavelength, $d$ - period of interference stripes, formed in the thin partially transparent film with an influence of the standing light wave; the reflection mirror is implemented as partially transparent for the light.

3. The interferometer which contains an optically conjugated light source, a reflection mirror, a spectrum analyzer and a thin partially transparent film which scatters or absorbs electrical field energy of the standing light wave, differs in that the interferometer is additionally equipped with the periodical system which contains photo-cells, and beamsplitter which is located between the above film and the light source; the beamsplitter is optically conjugated with the periodical system which contains photo-cells; the above film, which thickness should not exceed $\lambda/2$, is located between the light source and the reflection mirror at an angle θ, determined by the equation $\sin \theta = \lambda/2d$, where θ - the angle between the thin partially transparent film and the light wave front, λ - wavelength; $d$ - period of interference stripes, formed in the thin partially transparent film with an influence of the standing light wave.

4. The method of spectrometry which is based on the registration of the standing light wave's interference stripe set by means of the thin partially transparent film that scatters or absorbs electrical field energy of the standing light wave; the above film, which thickness should not exceed $\lambda/2$, is located between the light source and the reflection mirror at an angle $\theta_1$ determined by the equation $\sin \theta_1 = \lambda/2 d_1$, where $\theta_1$ - the angle between the thin partially transparent film and the light wave front, λ - wavelength, $d$ - period of the interference stripes, formed in the thin partially transparent film with an influence of the standing light wave; the registration of the above interference stripes with period $d_1$ is implemented in a spatial frequency signal form by means of projecting the image of the above set on the periodical system which contains photo-cells; electric signals received from the above photo-cells are registered with relation to location of these photo-cells in the above periodical system, and analyzed; the second thin partially transparent film, which thickness should not exceed $\lambda/2$, is located between the first partially transparent thin film and the reflection mirror at an angle $\theta_2$ determined by the equation $\sin \theta_2 = \lambda/2d_2$, where $\theta_2$ - the angle between the second thin partially transparent film and the light wave front, λ - wavelength, $d_2$ - period of the interference stripes, formed in the second thin partially transparent film with an influence of the standing light wave; the angle $\theta_1$ between the first thin partially transparent film plane and the reflection mirror plane is set in relation to the angle $\theta_2$ between the second thin partially transparent film plane and the reflection mirror plane in the range 0-180°, the second thin partially transparent film plane should be rotated around the axis matching the light expansion direction relatively to the first thin partially transparent film plane at an angle Ω ranged 0.1-90°; the images of two sets of interference stripes obtained in such a way are projected on the matrix periodical system which contains photo-cells.

**5.** The interferometer which contains an optically conjugated light source, a reflection mirror, a spectrum analyzer, a thin partially transparent film which scatters or absorbs electrical field energy of the standing light wave, located between the light source and the reflection mirror, inclined to the plane of the above mirror; a periodical system which contains photo-cells and located behind the reflection mirror; the reflection mirror is implemented as partially transparent for the light; differs in that the interferometer is additionally equipped with the second thin partially transparent film, which scatters or absorbs electrical field energy of the standing light wave, located between the first thin partially transparent film and the reflection mirror and inclined to the plane of the above mirror; the second thin partially transparent film is rotated around the optical axis of the interferometer relatively to the plane of the first thin partially transparent film; and the periodical system which contains photo-cells is implemented as a matrix periodical system.

**6.** The interferometer which contains an optically conjugated light source, a reflection mirror, a spectrum analyzer, a thin partially transparent film which scatters or absorbs electrical field energy of the standing light wave, located between the light source and the reflection mirror, inclined to the plane of the above mirror; a periodical system which contains photo-cells, placed behind the reflection mirror; differs in that the interferometer is additionally equipped with the second thin partially transparent film which scatters or absorbs electrical field energy of the standing light wave, located between the first thin partially transparent film and the reflection mirror and inclined to the plane of the above mirror; a beamsplitter, located between the first thin partially transparent film and the light source; the second thin partially transparent film is rotated around the optical axis of the interferometer relatively to the plane of the first thin partially transparent film; and the periodical system which contains photo-cells is optically conjugated with the beamsplitter and implemented as a matrix periodical system.

**7.** The method of spectrometry which is based on the registration of the standing light wave's interference stripe set by means of the thin partially transparent film which scatters or absorbs electrical field energy of the standing light wave, differs in that the above film, which thickness should not exceed $\lambda/2$, is located between the light source and the reflection mirror at an angle θ, determined by the equation $sin\ \theta = \lambda/2d$, where θ - the angle between the thin partially transparent film and the light wave front, $\lambda$ - wavelength, $d$ - period of interference stripes, formed in the thin partially transparent film with an influence of the standing light wave; the registration of the above standing light wave's interference stripe set with period $d$ is implemented in a spatial frequency signal form by means of projecting the image of the above set on the matrix periodical system which contains photo-cells; the electric signals received from the above photo-cells are registered with relation to location of these photo-cells in the above matrix periodical system and analyzed; the matrix periodical system which contains photo-cells, is implemented capable to rotate around the axis matching the light expansion direction.

**8.** The method of spectrometry which is based on the registration of the standing light wave's interference stripe set by means of the thin partially transparent film which scatters or absorbs electrical field energy of the standing light wave, differs in that the above film, which thickness should not exceed $\lambda/2$, is located between the light source and the reflection mirror at an angle θ, determined by the equation $sin\ \theta = \lambda/2d$, where θ - the angle between the thin partially transparent film and the light wave front, $\lambda$ - wavelength, $d$ - period of interference stripes, formed in the thin partially transparent film with an influence of the standing light wave; the registration of the above standing light wave's interference stripe set with period d is implemented in a spatial frequency signal form by means of projecting the image of the above set on the matrix periodical system, which contains photo-cells placed in parallel arrays with a horizontal period $d_1$ and vertical period $d_m$; the matrix periodical system is implemented capable to rotate around the axis matching the light expansion direction by the angle $\alpha$ between horizontal arrays of photo-cells and interference stripes projected to the matrix periodical system, the angle $\alpha$ is determined by the equation $sin\ \alpha = d/d_1$, the vertical period of photo-cell arrays is determined by the equation $d_m = (N+1)d/cos\ \alpha$, where $N$ - amount of photo-cells located in an array of the above periodical matrix system; the electric signals received from the above photo-cells are registered with relation to location of these photo-cells in the matrix periodical system and analyzed.

**9.** The interferometer which contains an optically conjugated light source, a reflection mirror, a spectrum analyzer, a thin partially transparent film which scatters or absorbs electrical field energy of the standing light wave, differs in that the interferometer is additionally equipped with the optically conjugated matrix periodical system, which contains photo-cells, located behind the reflection mirror and implemented capable to rotate around the axis of the interferometer; the above film, which thickness should not exceed $\lambda/2$, located between the light source and the reflection mirror at an angle θ, determined by the equation $sin\ \theta = \lambda/2d$, where θ-the angle between the thin partially transparent film and the light wave front, λ - wavelength, *d* -period of interference stripes, formed in the thin partially transparent film with an influence of the standing light wave; the reflection mirror is implemented as partially transparent for the light.

10. The interferometer which contains an optically conjugated light source, a reflection mirror, a spectrum analyzer, a thin partially transparent film which scatters or absorbs electrical field energy of the standing light wave, differs in that the interferometer is additionally equipped with the optically conjugated matrix periodical system, which contains photocells, and a beamsplitter, located between the above film and the light source, optically conjugated with the matrix periodical system containing photocells; the above matrix periodical system is implemented capable to rotate around the axis of the interferometer, and the above film, which thickness should not exceed λ/2, is located between the light source and the reflection mirror at an angle θ, determined by the equation *sin* θ = λ/2d, where θ - the angle between the thin partially transparent film and the light wave front, λ - wavelength, *d* - period of interference stripes, formed in the thin partially transparent film with an influence of the standing light wave.

Fig. 1

Fig. 2

Fig. 3

Fig. 4

Fig. 5

Fig. 6

Fig. 7

Fig. 8

Fig. 9

Fig. 10

Fig. 11

## INTERNATIONAL SEARCH REPORT

| International application No. |
| --- |
| PCT/RU 02/00294 |

A. CLASSIFICATION OF SUBJECT MATTER

G01J 3/00, G01B 9/02, G01R 23/17

According to International Patent Classification (IPC) or to both national classification and IPC **(MPK-7)**

B. FIELDS SEARCHED

Minimum documentation searched (classification system followed by classification symbols) **(MPK-7)**

G01J 3/00,3/18, G01B 9/02, G01R 23/17, G01B 11/14, H01J 40/14

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | US 4443107 (DAVID H. ALEXANDER et.al.) Apr. 17, 1984 | 1-10 |
| A | SU 1024746 A (SPETSIALNOE KONSTRUKTORSKOE BJURO NAUCHNOGO PRIBOROSTROENIYA "OPTIKA"SIBIRSKOGO OTDELENIYA AN SSSR et al) 23.06.1983 | 1-10 |
| A | GB 2207253 A (THE SECRETARY OF STATE FOR TRADE & INDUSTRY) 25 Jan. 1989 | 1-10 |
| A | US 5003188 (TOKYO AIRCRAFT INSTRUMENT CO., LTD.) Mar. 26, 1991, the abstract, column 3, lines 40-55, figure. 4 | 1-10 |

☐ Further documents are listed in the continuation of Box C. ☐ See patent family annex.

\* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
| --- | --- |
| **03 October 2002 (03.10.2002)** | **10 October 2002 (10.10.2002)** |

| Name and mailing address of the ISA/ | Authorized officer |
| --- | --- |
| **ISA/RU** | O. BOBK |
| Facsimile No. | Telephone No. |

Form PCT/ISA/210 (second sheet) (July 1992)